# EUROPÄISCHE PATENTSCHRIFT

(11) **EP 2 061 975 B1**
(45) Veröffentlichungstag und Bekanntmachung des Hinweises auf die Patenterteilung: **08.01.2014**
(21) Anmeldenummer: 07820084.7
(22) Anmeldetag: 10.09.2007
(51) Int. Cl.: F16C 33/80, F16H 57/04, F16C 33/78, F16C 33/66

(54) **DICHTUNGSEINRICHTUNG FÜR LAGER EINES GETRIEBES**
SEALING DEVICE FOR BEARINGS OF A TRANSMISSION
DISPOSITIF D'ÉTANCHÉITÉ DES PALIERS D'UN ENGRENAGE

(30) Priorität: 11.09.2006 DE 102006042612
(43) Veröffentlichungstag der Anmeldung: 27.05.2009
(73) Patentinhaber: ZF Friedrichshafen AG, 88038 Friedrichshafen (DE)
(72) Erfinder: DRABEK, Michael, 14776 Brandenburg (DE); BERNAU, Wolfgang, 14776 Brandenburg (DE)
(74) Vertreter: Paul, Andreas
(86) Internationale Anmeldenummer: PCT/EP2007/059433
(87) Internationale Veröffentlichungsnummer: WO 2008/031777

(56) Entgegenhaltungen:
- US-A- 1 991 614
- US-A- 2 014 859
- US-A- 2 423 973

## Beschreibung

Die vorliegende Erfindung betrifft eine Dichtungseinrichtung für Lager eines Getriebes gemäß dem Oberbegriff des Patentanspruchs 1, siehe US 2014859A.

Lager in Getrieben werden vorzugsweise als Clean Bearing Lager ausgebildet, bei denen der Eintritt von Partikeln, z.B. Schwebepartikeln in das Lager verhindert wird. Wenn eine Clean Bearing Auslegung nicht möglich ist, was z.B. bei Rollenlager der Fall ist, werden die Lager bezüglich der Lebensdauer eingeschränkt. Einerseits erzeugt das Dichten der Lager in nachteiliger Weise große Verluste; andererseits führt die Lebensdauerreduzierung der offenen Lager zum Einsatz größeren Lagerbaureihen.

Der vorliegenden Erfindung liegt die Aufgabe zugrunde, eine Dichtungseinrichtung für Lager eines Getriebes anzugeben, welche als verlustlose Dichtung ausgebindet ist. Des weiteren soll die Dichtungseinrichtung derart ausgebildet sein, dass sie auch für Lager geeignet ist, die nach dem Stand der Technik nicht als Clean Bearing Lager ausgeführt werden können.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Dichtungseinrichtung vorgeschlagen, welche ein Gehäuse mit einem Deckel umfasst, in dem das auf einer Welle vorgesehene Lager angeordnet ist, wobei durch die Befestigung des Lagers im Gehäuse an der dem Deckel abgewandten Seite des Lagers ein definierter Spalt zwischen der Welle und dem Befestigungsbauteil entsteht, derart, dass das Lager durch die Anordnung im Gehäuse und die definierte Dimensionierung des Spalts gegen Initialverschmutzungen abgesichert ist.

Des weiteren weist das Gehäuse eine Ölzuführung und die Welle eine Drehkontur auf, derart, dass während des Betriebs ein Eindringen von Verschmutzungen durch den zwischen der Ölzuführung und dem Spalt entstehenden Ölstrom weitgehend verhindert wird.

Nach der Erfindung ist das Lager durch einen an der dem Deckel abgewandten Seite des Lagers vorgesehenen Blechring befestigt, wobei zwischen dem Innendurchmesser des Blechrings und der Welle ein definierter Ringspalt entsteht, wobei der Deckel vom Ende der Welle beabstandet angeordnet ist. Das Gehäuse kann eine Durchgangsbohrung auf weisen, durch die dem Lager Öl zugeführt wird. Des weiteren ist auf dem im Gehäuse angeordneten Bereich der Welle eine Drehkontur aufgebracht, welche in einer vom Gehäuse weg gerichtete Förderwirkung durch den Spalt zwischen dem Innendurchmesser des Blechrings und der Welle resultiert.

Durch die erfindungsgemäße Konzeption wird eine Dichtungseinrichtung für ein Lager zur Verfügung gestellt, welche keine Verluste erzeugt und für jegliche Art von Lagern geeignet ist.

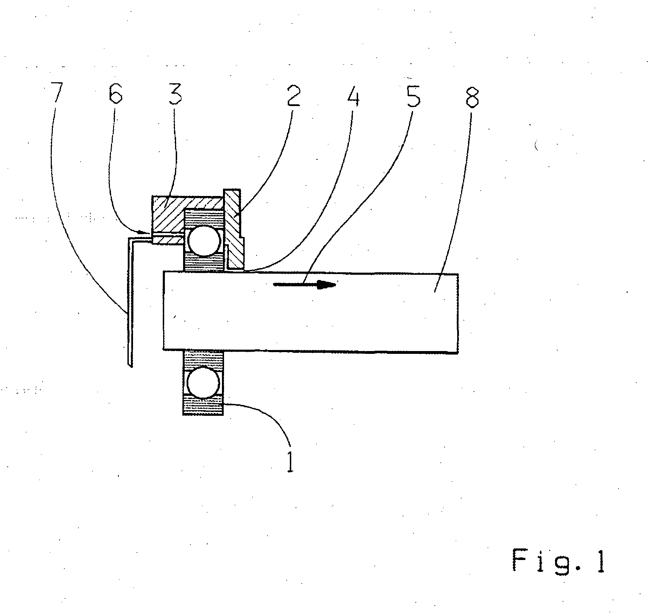

Die Erfindung wird im folgenden anhand der beigefügten Figur, welche eine schematische Darstellung einer bevorzugten Ausführungsform der Erfindung ist, beispielhaft näher erläutert.

Gemäß der Figur ist ein auf einer Welle 8 vorgesehenes Lager 1 in einem Gehäuse 3 mit einem an der dem Deckel 7 des Gehäuses 3 abgewandten Seite des Lagers 1 vorgesehenen Blechring 2 befestigt, wobei zwischen dem Innendurchmesser des Blechrings 2 und der Welle 8 ein definierter Ringspalt 4 entsteht und wobei das Gehäuse 3 eine Durchgangsbohrung 6 aufweist, welche als Zuführung für Öl dient.

Des weiteren ist auf der Welle 8 im Bereich, der im Gehäuse 3 angeordnet ist, eine Drehkontur derart aufgebracht, dass eine Förderwirkung in Richtung des Pfeils 5 entsteht. Gemäß der Erfindung ist das Lager 1 durch die Anordnung im Gehäuse 3 und die geringe Dimensionierung des Spalts 4 gegen Initialverschmutzungen abgesichert;, die Drehkontur der Welle 8 und der daraus resultierende Ölstrom zwischen der Durchgangsbohrung 6 und dem Spalt 4 verhindern das Eindringen von Verschmutzungen während des Betriebs.

### Bezugszeichen

- 1: Lager
- 2: Blechring
- 3: Gehäuse
- 4: Spalt
- 5: Pfeil, Förderrichtung
- 6: Durchgangsbohrung,
- 7: Deckel
- 8: Welle

## Patentansprüche

1. Dichtungseinrichtung eines Lager (1), mit folgenden Merkmalen:
es ist ein Gehäuse (3) vorgesehen, in dem der Lageraussenring des Lagers (1) angeordnet ist, dessen Innenring auf einer Welle (8) angeordnet ist,
am Gehäuse (3) ist ein Deckel (7) angeordnet, der ein Ende der Welle (8) umschließt,
das Gehäuse (3) weist eine Schmiermlttelzuführung (6) auf, durch die dem Lager Schmiermittel zuführbar ist,
die Welle weist zumindest im Bereich eines Ringspalts eine Drehkontur auf, welche bei einer Drehung der Welle eine Förderung von Schmiermittel durch den Ringspalt in axialer Richtung vom Gehäuse (3) weg bewirkt, **gekennzeichnet durch** die Merkmale:
die Dichtungseinrichtung ist in einem Getriebe angeordnet, die Schmiermittelzuführung ist eine Ölzuführung **durch** die dem Lager Öl zuführbar ist
zur Befestigung des Lageraußenrings des Lagers (1) im Gehäuse (3) ist an der dem Deckel (7) abgewandten Seite des Lagers (1) ein Befestigungsbauteil (2) angeordnet, welches sich vom Außenring radial so weit nach innen erstreckt, dass es zusammen mit der gelagerten Welle (8) einen radialen Ringspalt (4) bildet,
das Gehäuse (3) ist ein Getriebegehäuse,
der Deckel (7) bildet zusammen mit dem Lager (1) und dem vom Deckel (7) umschlossenen Wellenende einen Ölraum innerhalb des Getriebegehäuses,
das Befestigungsbauteil (2) ist als Blechring ausgebildet,
der Blechring liegt am Außenring des Lagers (1), nicht aber am Innenring des Lagers an und weist dazwischen einen Absatz auf,
zwischen dem Innenring und dem Blechring bildet sich ein Axialspalt,
wobei während des Betriebs ein Eindringen von Verschmutzungen dadurch weitgehend verhindert wird, dass ein Ölstrom zwischen der Ölzuführung (6) und dem Ringspalt (4) entsteht.

2. Dichtungseinrichtung nach Anspruch 1, **dadurch gekennzeichnet, dass** die Ölzuführung im Gehäuse als Durchgangsbohrung (6) ausgebildet ist.

3. Dichtungseinrichtung nach Anspruch 1 oder 2, **dadurch gekennzeichnet, dass** die Drehkontur als Gewinde oder als Förderschnecke ausgebildet ist.

## Claims

1. Sealing device of a bearing (1), having the following features:
a housing (3) is provided, in which the bearing outer ring of the bearing (1) is arranged, the inner ring of which is arranged on a shaft (8),
a cover (7) which encloses one end of the shaft (8) is arranged on the housing (3),
the housing (3) has a lubricant feed means (6), by way of which lubricant can be fed to the bearing,
at least in the region of an annular gap, the shaft has a rotational contour which, during a rotation of the shaft, brings about a delivery of lubricant through the annular gap in the axial direction away from the housing (3), **characterized by** the features:
the sealing device is arranged in a transmission,
the lubricant feed means is an oil feed means, by way of which oil can be fed to the bearing,
a fastening component (2) is arranged on that side of the bearing (1) which is remote from the cover (7) for fastening the bearing outer ring of the bearing (1) in the housing (3), which fastening component (2) extends radially inwards from the outer ring to such an extent that it forms a radial annular gap (4) together with the mounted shaft (8),
the housing (3) is a transmission housing,
the cover (7) forms an oil space within the transmission housing together with the bearing (1) and the shaft end which is enclosed by the cover (7),
the fastening component (2) is configured as a sheet-metal ring,
the sheet-metal ring bears against the outer ring of the bearing (1), but not against the inner ring of the bearing, and has a step in between,
an axial gap is formed between the inner ring and the sheet-metal ring,
a penetration of contaminants being largely prevented during operation by virtue of the fact that an oil flow is produced between the oil feed means (6) and the annular gap (4).

2. Sealing device according to Claim 1, **characterized in that** the oil feed means is configured in the housing as a through hole (6).

3. Sealing device according to Claim 1 or 2, **characterized in that** the rotational contour is configured as a thread or as a conveying worm.

## Revendications

1. Dispositif d'étanchéité d'un palier (1) comprenant les caractéristiques suivantes :
il est prévu un boîtier (3) dans lequel est disposée la bague extérieure de palier du palier (1), la bague intérieure du palier étant disposée sur un arbre (8),
un couvercle (7) est disposé sur le boîtier (3), lequel couvercle entoure une extrémité de l'arbre (8),
le boîtier (3) présente une alimentation en lubrifiant (6) par laquelle du lubrifiant peut être acheminé au palier,
l'arbre présente au moins dans la région d'une fente annulaire un contour de rotation qui, lors d'une rotation de l'arbre, provoque un déplacement du lubrifiant à travers la fente annulaire dans la direction axiale hors du boîtier (3), **caractérisé par** les caractéristiques suivantes :
le dispositif d'étanchéité est disposé dans un engrenage,
l'alimentation en lubrifiant est une alimentation en huile par laquelle de l'huile peut être acheminée au palier,
pour la fixation de la bague extérieure de palier du palier (1) dans le boîtier (3), un composant de fixation (2) est disposé sur le côté du palier (1) opposé au couvercle (7), lequel composant de fixation s'étend radialement vers l'intérieur depuis la bague extérieure dans une mesure telle qu'il forme, conjointement avec l'arbre (8) supporté sur le palier, une fente annulaire radiale (4),
le boîtier (3) est un boîtier d'engrenage,
le couvercle (7) forme, conjointement avec le palier (1) et l'extrémité de l'arbre entourée par le couvercle (7), un espace d'huile à l'intérieur du boîtier d'engrenage,
le composant de fixation (2) est réalisé sous forme de bague en tôle,
la bague en tôle s'applique contre la bague extérieure du palier (1) mais ne s'applique toutefois pas contre la bague intérieure du palier et présente un décrochement entre elles,
entre la bague intérieure et la bague en tôle se forme une fente axiale,
pendant le fonctionnement, une pénétration de salissures étant essentiellement empêchée par le fait qu'un flux d'huile circule entre l'alimentation en huile (6) et la fente annulaire (4).

2. Dispositif d'étanchéité selon la revendication 1, **caractérisé en ce que** l'alimentation en huile dans le boîtier est réalisée sous forme d'alésage traversant (6).

3. Dispositif d'étanchéité selon la revendication 1 ou 2, **caractérisé en ce que** le contour de rotation est réalisé sous forme de filetage ou sous forme de vis transporteuse.
